# EUROPÄISCHE PATENTANMELDUNG

(11) **EP 0 895 064 A2**
(43) Veröffentlichungstag der Anmeldung: **03.02.1999**
(21) Anmeldenummer: 98113535.3
(22) Anmeldetag: 21.07.1998
(51) Int. Cl.: G01D 5/353

(54) **Verfahren und Vorrichtung zum Aufnehmen und Auswerten von externen Einflussgrössen an optischen Fasern**

(30) Priorität: 26.07.1997 DE 19732300
(71) Anmelder: Deutsche Telekom AG, 53113 Bonn (DE)
(72) Erfinder: Hartmut, Gruhl Dr., 64372 Ober-Ramstadt (DE)

(57) **Zusammenfassung**

Die bekannten optischen Rückstreumeßgeräte (OTDR), die für die Ermittlung von Faserdämpfungsprofilen verwendet werden, sind mit einer Totzone und zu geringer Empfindlichkeit behaftet um Biegekoppler erkennen zu können. Mit einem veränderten Auswerteprinzip soll auch eine vielseitigere Anwendbarkeit erreicht werden.

Die Anregungswellenlänge wird derart langwellig gewählt, daß die Ramanstreuung und damit die Temperaturabhängigkeit der Intensität bzw. der Wellenlänge der Anti-Stokes-Linie bei kürzerer Wellenlänge ausgewertet werden kann. Dabei wird diese Wellenlänge in den Bereich des Dämpfungsminimums der Faser und der maximalen Detektorempfindlichkeit gelegt, so daß ein Temperaturprofil der Faser: Temperatur als Funktion des Ortes auf der Faser gemessen wird.

Neben den bisherigen Anwendungsgebieten des OTDR mit höherer Genauigkeit und Totzonenfreiheit werden als neue Anwendungsmöglichkeiten Temperatur- und Brandüberwachung eröffnet.

## Beschreibung

Die Erfindung bezieht sich auf ein Verfahren der im Oberbegriff des Patentanspruchs 1 näher bezeichneten Art und auf eine Vorrichtung, wie sie im Oberbegriff des Patentanspruchs 2 beschriebenen ist. Derartige Verfahren und Anordnungen sind z.B. aus EP 0 213 872 A2 bekannt.

Die bekannten und überwiegend verwendeten optischen Rückstreumeßgeräte (OTDR) senden einen kurzen Laserimpuls in die Faser und detektieren den zurückgestreuten Anteil der Rayleighstreuung. Aus der Intensität und der Laufzeit des rückgestreuten Lichtes wird ein Dämpfungsprofil (Faserdämpfung als Funktion des Ortes) der Faser erkennbar, was auch zur Überwachung optischer Fasern für fernmeldetechnische Übertragung genutzt wird. Jedoch ist das Verfahren für sicheres Erkennen zu unempfindlich und es kann eine erste Strecke von einigen hundert Metern, die wegen der dort vorhandenen hohen Leistung gegen Abhören über nur leicht gekrümmte Biegekoppler besonders gefährdet ist, wegen einer Totzone nicht mit überwacht werden.

Die Nachteile dieser Verfahren und Geräte bestehen darin, daß sie eine Totzone am Anfang haben und daß sie zu unempfindlich sind, um einen evtl. Biegekoppler von unbefugten Abhörern zu entdecken.

Es sind auch bereits viele Meßanwendungen des von C.V. Raman in 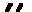 Indian Journal of Physik", Vol. 2, S. 387, bereits 1928 beschriebenen Effektes als wichtige Ergänzung zur Infrarotspektroskopie bei der Molekülstrukturbestimmung bekannt.

Im Zusammenhang mit optischen Fasern ist im EP 0 405 752 A2 beschrieben, wie mittels des spontanen Ramaneffektes bestimmte Substanzen in optischen Fasern nachzuweisen und zu lokalisieren sind. Auch ist im EP 0 651 479 A1 eine Anwendung des stimulierten Ramaneffektes in optischen Ramanfaserverstärkern realisiert.

Aus dem EP 0 213 872 A2 sind auch vergleichende Temperaturmessungen unter Verwendung der Stokes- und Anti-Stokes-Raman-Linien entlang optischer Fasern und deren Verwendung für Feueralarm in Klimaanlagen bekannt.

Die Nachteile dieser Verfahren und Geräte bestehen darin, daß sie für die Überwachung optischer Fasern für fernmeldetechnische Übertragung entweder nicht vorgesehen oder geeignet sind, weil sie eine Totzone am Anfang aufweisen bzw. zu unempfindlich sind, um ein evtl. Biegekoppler von unbefugten Abhörern zu entdecken, der an seiner Ankoppelstelle eine Temperaturänderung an der optischen Faser verursacht.

Der Erfindung liegt deshalb die Aufgabe zugrunde, ein Verfahren und eine Vorrichtung zu finden , bei dem eine solche Totzone vermieden und eine höhere Empfindlichkeit erreicht wird, und das zudem durch Verzicht auf Vergleichsmessungen vielseitiger verwendbar sein, und auch Temperaturprofile von optischen Fasern für fernmeldetechnische Übertragung messen soll.

Diese Aufgabe wird mit einem Verfahren entsprechend dem Kennzeichen des Patentanspruchs 1 durch einen Austausch des Auswerteprinzips gegenüber der OTDR-Rückstreumessung mit der Auswertung der Ramanstreuung statt der Rayleighstreuung gelöst, wobei sich für das gemessene Temperaturprofil anhand der Temperaturabhängigkeit der Intensität der Anti-Stokes-Raman-Linien zusätzliche Verwendungsmöglichkeiten eröffnen.

Entsprechend dem Kennzeichen des Patentanspruchs 2 unterscheidet sich eine Vorrichtung nach der Erfindung hauptsächlich durch die Auswahl des langwelligen Lasersenders und des Detektors von den bekannten OTDR.

Vorteilhafte Weiterbildungsmöglichkeiten der Erfindung sind aus den Kennzeichen der Unteranspruches 3 ersichtlich, welcher der Steigerung der Meßempfindlichkeit dient, falls zur Temperaturmessung die Abhängigkeit der Wellenlänge der Anti-Stokes-Raman-Linie von der Temperatur ausgenützt wird. Auch wird bei dem Verfahren nach der Erfindung nicht Stokes- und Anti-Stokes gemessen, sondern es genügt bei Eichung eine Detektion der Anti-Stokes-Raman-Linie.

Da die Anregung sehr langwellig erfolgt, ergibt sich nicht nur eine höhere Empfindlichkeit, die auch Angriffsstellen, wie Biegekoppler, an der Faser erkennen läßt, sondern es lassen sich auch durch andere Ereignisse bedingte Fasertemperaturänderungen auswerten. Die Totzone am Anfang entfällt ebenfalls.

Die Erfindung wird anhand der nachfolgenden Ausführungsbeispiele näher erläutert. In den zugehörigen Zeichnungen zeigen die:
- Fig. 1: spektrale Lagen der Anregungs- und Anti-Stokes-Wellenlängen und die spektrale Detektorempfindlichkeit und
- Fig. 2: Intensitäten der Anti-Stokes-Linie in logarithmischem Maßstab als Funktion des Faserortes.

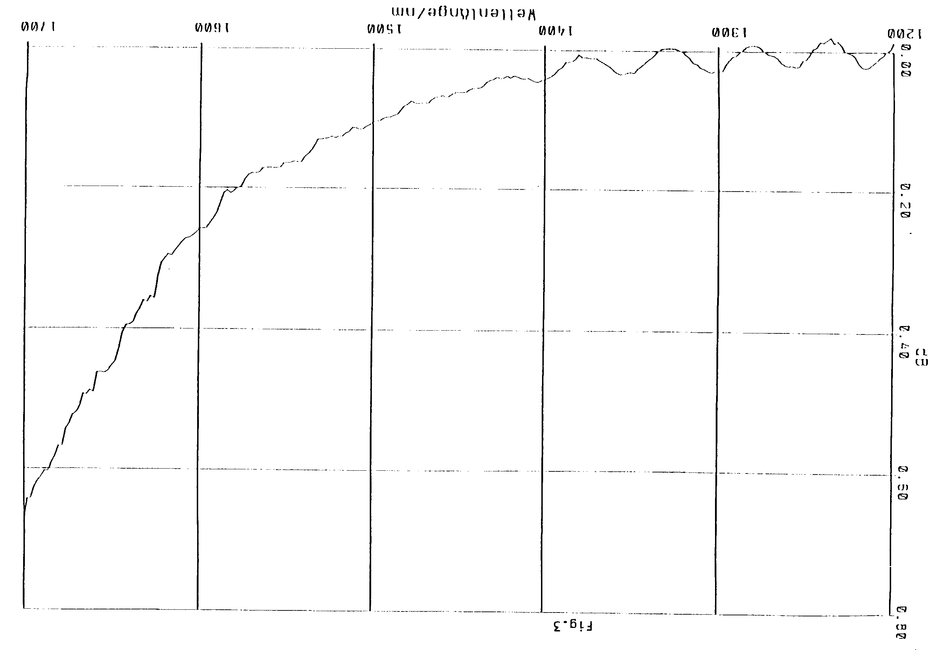

- Fig. 3: Dämpfungszunahme

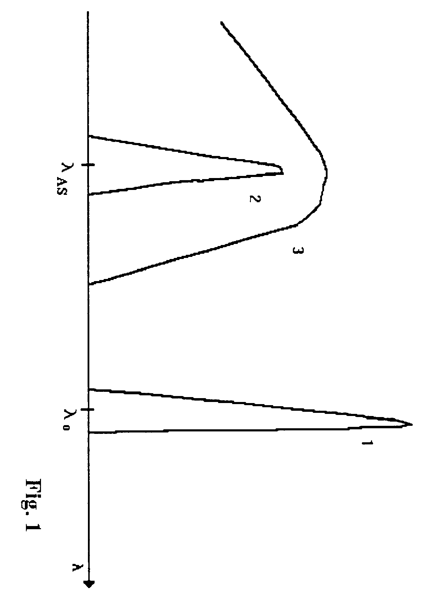

Aus der Fig. 1 ist auf dem Verlauf der Wellenlänge λ die größere Anregungswellenlänge 1 bei λₒ und die demgegenüber zur kurzwelligen Seite nach λ_{AS} verschobene Anti-Stokes-Linie 2 ersichtlich. Hierzu ist noch eine geeignete spektrale Empfindlichkeit 3 des Detektors eingetragen, die bei der Anregungswellenlänge λₒ beliebig verringert sein kann.

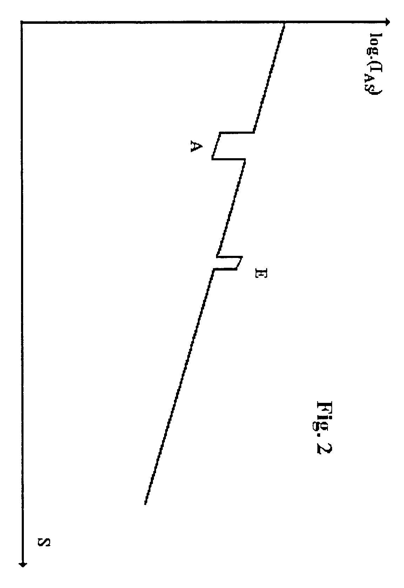

Aus der Fig. 2 ist erkennbar, wie der Logarithmus der Intensität der Anti-Stokes-Linie I_{AS} als Funktion des Faserortes bei steigender Strecke S abnimmt. Die Einflüsse örtlicher Temperaturänderungen an der Faser sind bei einer Abkühlung A und bei einer Erwärmung E der Faser angedeutet.

Bei der Realisierung der Erfindung bei Quarzglasfasern wird der im OTDR übliche Lasersender, (oft bei 1310nm oder 1550nm) gegen einen Lasersender mit einer Anregungswellenlänge zwischen 1650 nm und 1750nm ausgetauscht und statt der Rayleighstreuung, die beim OTDR als Meßsignal verwendet wird, wird die Ramanstreuung detektiert. Bei Wellenlängen oberhalb von 1650nm ist der Detektor wegen unzureichender Empfindlichkeit 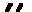 blind" und es wird die kurzwellig verschobene Anti-Stokes-Linie der Ramanstreuung gemessen. Die Intensität dieser Linie ist temperaturabhängig. Eine starke Linie gibt es im Quarz bei einer Ramanverschiebung von 440 1/cm. Die Anti-Stokes-Linie liegt dann, wie Fig. 1 zeigt, zwischen 1538nm und 1625nm, also im Dämpfungsminimum der Einmodenquarzglasfaser. Damit ist eine große Meßreichweite gewährleistet.

Für andere Fasertypen (z.B. Kunststoffasern) ist die gleiche Lösung möglich. Dann sind Anregungswellenlänge des Lasersenders, Detektor und Ramanübergang und damit die Wellenlänge der Anti-Stokes-Linie in gleicher Weise entsprechend Fig. 1 zu wählen. Auch hierbei sollte die Anti-Stokes-Linie im Faserdfämpfungsminimum liegen.

Für die Wahl der Wellenlängen für beliebige Fasern kann dann wie folgt vorgegangen werden:
1.Die Anti-Stokes-Linie wird in das Dämpfungsminimum gelegt.
2.Der Detektor wird so ausgesucht, daß er dort maximale Empfindlichkeit hat.
3.Der Ramanübergang wird so gewählt, daß die Anregungswellenlänge so liegt, daß der Detektor dort unempfindlich ist.

Mit dem Verfahren nach der Erfindung werden allgemein Temperaturprofile an optischen Fasern nicht mittels Stokes und Anti-Stokes, sondern nur mittels Auswertung der Anti-Stokes-Linie und zusätzlicher Eichung gemessen. Es entfällt die störende Totzone. Die Ramanstreuung fehlt im Einkoppelungsreflex, der den Detektor vorübergehend übersteuert und so die Totzone verursacht. Dieser Einkoppelungsreflex hat die Wellenlänge der langwelligen Anregungslinie, für die der Detektor blind ist.

Das in Fig. 2 dargestellte ausgewertete Signal zeigt, daß sich nach der Erfindung, die auch als Raman-OTDR (ROTDR) bezeichnet werden kann, wie gewohnt ein mit dem Faserort abfallendes Signal ergibt. Diesem Signal sind temperaturabhängige Stufen mit einer Absenkung bei Abkühlung A und einer Erhöhung bei einer Erwärmung E überlagert. Eine Eichung ermöglicht die Zuordnung zwischen Temperatur und Stufenhöhe. Da, wie beim OTDR, eine Auflösung von 0,01 dB vorliegt, ist im Bereich von -40°C bis 80°C eine Temperaturauflösung von 0,5°C erzielbar.

Die entstehende Rayleighstreuung muß nicht herausgefiltert werden, weil der Detektor bei der Anregungswellenlänge unempfindlich ist und somit gleichzeitig als Filter wirkt. Ein zusätzliches Filter, z.B. eine zur Spule gewickelte Faser, kann aber zusätzlich verwendet werden.

Die Messung von Temperaturprofilen an optischen Fasern ist zur Sicherheitsüberwachung und bei Wartungsarbeiten an optischen Fasernetzen anwendbar. Zusätzlich bietet sie die Möglichkeit eines umfassenden rein optisch arbeitenden Brandmeldesystems. Im Brandfalle wird sich die Faser deutlich erwärmen und so ist es möglich, den Brand frühzeitig zu erkennen und dabei zu lokalisieren. Da das System rein optisch arbeitet, ist es unempfindlich gegenüber elektromagnetischen Störungen.

Es ist beispielsweise denkbar, daß der Kabelbetreiber seine Fasernetze mit gegenseitigem Nutzen in fremden Systemen (z.B. U-Bahnschächten) verlegt und dafür eine Faser dem Systembetreiber zur Brandüberwachung überläßt. Bezüglich solcher Systeme ist weiterhin u. A. auch zu denken an:
- Tunnelstrecken für Bahn oder Autobahn
- Untersee-Kanaltunnel
- Kabelschächte in Hochhäusern
- Fahrstuhlschächte
- Flughafenanlagen

## Patentansprüche

1. Verfahren zum Aufnehmen und Auswerten von externen Einflußgrößen an optischen Fasern, bei dem ein kurzer Laserimpuls im langwelligen Bereich in die optische Faser gesendet und die Intensität, Wellenlänge und Laufzeit der rückgestreuten Anti-Stokes-Raman-Linie als Funktion des Ortes auf der optischen Faser detektiert wird,
**dadurch gekennzeichnet**,
- daß die Wellenlänge der Anti-Stokes-Raman-Linie in den Bereich des Dämpfungsminimums der Faser und der maximalen Detektorempfindlichkeit gelegt wird, und
- daß die optische Faser ausschließlich bzw. zusätzlich für fernmeldetechnische Übertragung genutzt wird, um empfindlich und tozonenfrei unbefugte Abhörbiegekoppler zu entdecken.

2. Vorrichtung zum Aufnehmen und Auswerten von externen Einflußgrößen an optischen Fasern, bei dem ein getasteter, Strahlung im langwelligen Bereich aussendender Laserimpulssender mit der optischen Faser und diese mit einem Detektor gekoppelt ist, der die Intensität, Wellenlänge und Laufzeit der rückgestreuten Anti-Stokes-Raman-Linie detektiert,
**dadurch gekennzeichnet**,
daß der Detektor bei der Anti-Stokes-Raman-Linie eine maximale Empfindlichkeit aufweist, die Wellenlänge der Anti-Stokes-Raman-Linie im Dämpfungsminimum der Faser liegt und der Detektor für die Anregungswellenlänge unempfindlich ist.

3. Verfahren nach Anspruch 1,
**dadurch gekennzeichnet**, daß zusätzlich vor dem Detektieren der Anti-Stokes-Linie schmalbandig bzw. abstimmbar gefiltert wird.
